# FASCICULE DE BREVET EUROPEEN

(11) **EP 1 847 486 B1**
(45) Date de publication et mention de la délivrance du brevet: **31.12.2008**
(21) Numéro de dépôt: 07290485.7
(22) Date de dépôt: 19.04.2007
(51) Int. Cl.: B65G 39/12, F16P 1/02

(54) **Station de support d'un convoyeur à bande et convoyeur la comportant**
Stützstation für ein Förderband und diese umfassender Förderer
Support station for a conveyor belt and conveyor comprising same

(30) Priorité: 21.04.2006 FR 0603579
(43) Date de publication de la demande: 24.10.2007
(73) Titulaire: Brunone, René, 27950 Saint Marcel (FR)
(72) Inventeur: Brunone, René, 27950 Saint Marcel (FR)
(74) Mandataire: Blot, Philippe Robert Emile

(56) Documents cités:
- EP-A1- 0 416 201
- DD-A- 59 725
- DE-C1- 3 940 786
- DE-U1- 9 103 825
- US-A- 3 217 862

## Description

La présente invention concerne une station de support d'un convoyeur à bande mobile du type comprenant :
- un berceau de guidage de la bande, le berceau comprenant au moins deux rouleaux de guidage et de support de la bande,
- un châssis de support des rouleaux, et
- une protection anti-coincement disposée le long des rouleaux et solidarisée au châssis, où la protection comprend un profilé de protection s'étendant continûment suivant la longueur d'au moins deux rouleaux en étant sensiblement parallèle à une génératrice de chaque rouleau, ledit profilé étant cintré et épousant la courbure du berceau de guidage.

Pour la manutention de matériaux en vrac, il est connu d'utiliser des transporteurs à bande, aussi appelés convoyeurs. Un tel transporteur comprend essentiellement une bande, refermée en boucle et supportée par des stations de support. La bande est maintenue à ses extrémités par deux rouleaux de retournement. L'un des rouleaux est moteur pour assurer l'entraînement de la bande.

Les stations de support sont généralement constituées d'un châssis et d'un berceau de support de la bande. Le berceau comprend généralement des rouleaux ou des patins de glissement.

Dans le cas de rouleaux, ceux-ci tournent avec l'avancement de la bande et présentent donc un risque pour un opérateur, du côté amont de chaque station, par rapport au sens d'avancement de la bande. En effet, le mouvement des rouleaux peut entraîner un vêtement et le coincer dans l'angle entre le rouleau et la bande. Cet angle est communément appelé angle rentrant. Un opérateur peut également se coincer la main par inadvertance dans l'angle rentrant au cours d'une opération de maintenance.

Il existe des dispositifs de protection anti-coincement pour stations de convoyeurs (voir par exemple DE 91 03 825 U1). Chaque type de convoyeurs nécessite un type de dispositif de protection particulier dont certains sont relativement coûteux.

L'invention a pour but de fournir un dispositif de protection simple et d'un coût modique.

A cet effet, l'invention a pour objet une station du type précité caractérisée en ce que le profilé comprend une âme longiligne et une gaine entourant l'âme longiligne. Suivant d'autres caractéristiques de l'invention :
- le profilé présente une section transversale comprenant un côté tourné vers la bande et un premier côté concave en arc de cercle adjacent sensiblement de même diamètre que les rouleaux et le côté en arc de cercle étant situé en regard de chaque rouleau ;
- la section transversale du profilé comprend un second côté en arc de cercle, adjacent au côté tourné vers la bande ;
- les rouleaux et le profilé sont espacés d'un espace non nul ; et
- la protection comprend des moyens de fixation au châssis, comprenant deux plaques latérales et des vis de fixation, le profilé comporte une face latérale à chacune de ses extrémités, les plaques latérales étant vissées, par les vis de fixation, au profilé sur chacune des faces latérales du profilé et étant fixées, par ailleurs, chacune latéralement au châssis.

L'invention a également pour objet un convoyeur caractérisé en ce qu'il comporte un ensemble de stations de support telles que décrites ci-dessus, et une bande de transport propre à circuler sur les stations, la bande et le profilé de chaque station étant espacés d'un espace non nul.

L'invention sera mieux comprise à la lecture de la description qui va suivre, donnée uniquement à titre d'exemple, et faite en se référant aux dessins annexés sur lesquels :
- la figure 1 est une vue schématique de profil d'un convoyeur à bande supportée par des stations à rouleaux ;
- la figure 2 est une vue de face d'une station selon le plan II-II de la figure 1 ;
- la figure 3 est une vue de profil correspondante, sensiblement suivant la flèche III de la figure 2.

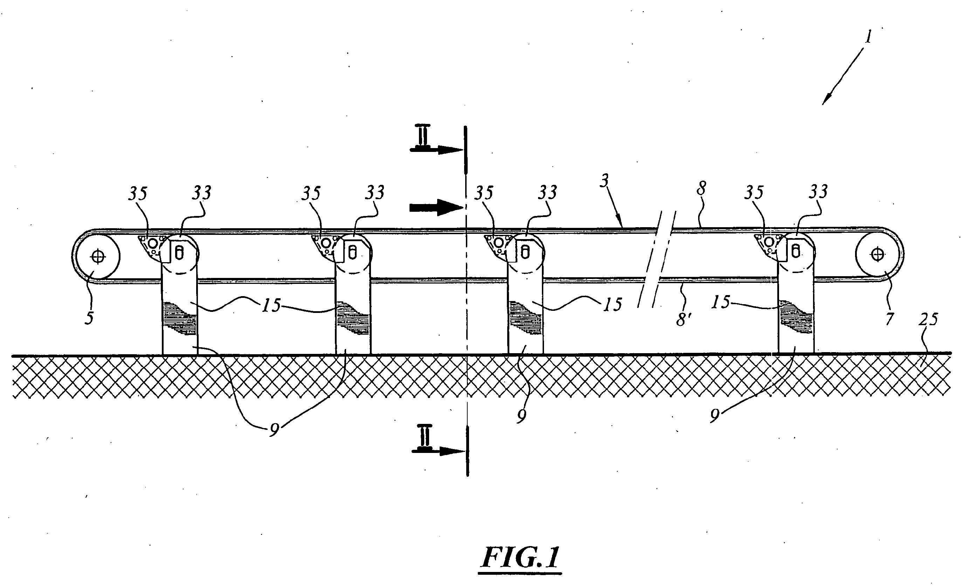

Le convoyeur 1 représenté sur la figure 1 est destiné par exemple au transport de minerais issus d'une carrière. Il comporte une bande transporteuse 3 repliée en boucle et engagée à ses extrémités autour de deux rouleaux 5 et 7 de retournement. L'un des deux rouleaux 5 est moteur pour assurer l'entraînement de la bande 3, définissant ainsi le côté amont de la bande 3. La boucle est ainsi divisée en un tronçon supérieur 8 de transport du minerai et un tronçon inférieur 8' de retour.

La bande 3, le long du tronçon supérieur 8, est supportée, sur sa longueur par plusieurs stations 9 assurant le support et le guidage de la bande 3. Les stations 9 sont toutes identiques.

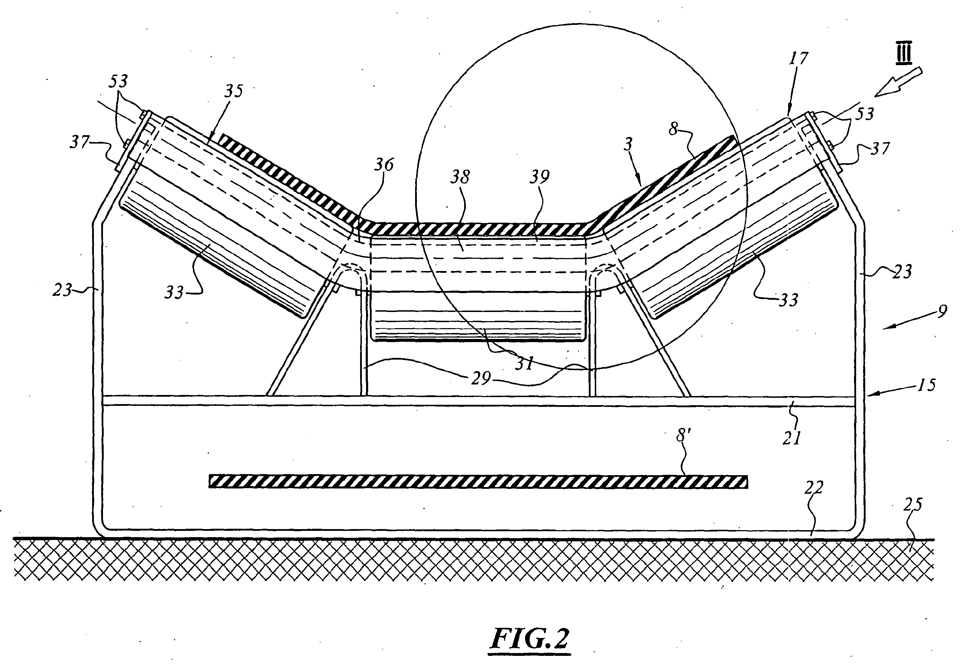

Comme le montre la figure 2, chaque station 9 comprend un châssis métallique d'appui 15 et un berceau 17 de support et de guidage de la bande 3. Le châssis 15 comprend essentiellement des poutres transversales supérieure 21 et inférieure 22, et deux pieds 23 d'appui sur le sol 25, de chaque côté de la bande 3. Les poutres transversales 21 et 22 relient les deux pieds 23. Le châssis 15 est posé directement sur le sol 25, par la poutre inférieure 22.

Les poutres supérieure et inférieure 21 et 22 sont espacées verticalement, le tronçon inférieur 8' de la bande 3 passant entre les deux poutres.

Le châssis 15 comprend deux pattes 29 de support des rouleaux. Les pattes 29 sont formées de lames métalliques dont les extrémités sont fixées à la poutre transversale supérieure 21 du châssis 15. Chaque patte 29 forme un triangle rectangle. Un rouleau central inférieur horizontal 31 et deux rouleaux latéraux inclinés 33 sont montés mobiles en rotation entre les pattes de support 29 et les pieds 23 du châssis 15. Ces rouleaux 31 et 33 s'étendent dans un même plan vertical et sont propres à recevoir la bande 3 et à déformer celle-ci en forme d'auge.

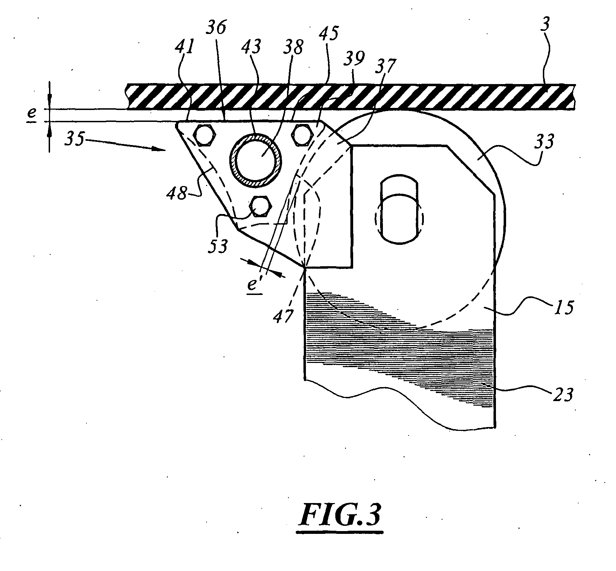

Du côté amont de la station de support 9, une protection 35 anti-coincement, visible sur la figure 3, masque l'angle dit rentrant, formé par la bande 3 et les rouleaux de support 31 et 33. La protection 35 comprend essentiellement un profilé 36 et des plaques de fixation 37. Le profilé 36 comprend une âme 38 tubulaire métallique et une gaine 39 de l'âme 38. La gaine 39 est en polyéthylène, par exemple. La section 41 de la gaine 39 est percée d'un orifice de réception 43 de l'âme tubulaire 38. La section 41 de la gaine 39 comprend un côté droit 45 et un côté 47, adjacent au côté 45, en arc de cercle, de même diamètre que les rouleaux 31 et 33. Ces deux côtés 45 et 47 forment un angle qui est conjugué de l'angle formé par la bande 3 et les rouleaux 31 et 33.

La section 41 de la gaine 39 comporte un second côté 48 en arc de cercle, de diamètre supérieur à celui du côté 47 apte à protéger un rouleau. Le côté 48 est, lui aussi, adjacent au côté droit 45.

La protection 35 est fixée au châssis 15 de la station 9 de part et d'autre de la bande 3, par les plaques 37 de fixation de diamètre supérieur.

Ces plaques de fixation 37 sont vissées par des vis 53 de fixation sur les deux faces latérales du profilé 36, et sont, par ailleurs, fixées au châssis 15, par exemple par soudage.

Le profilé 36 s'étend ainsi d'un bout à l'autre du berceau 17 continûment en étant retenu seulement à ses extrémités.

La protection 35 est située sous la bande 3 en regard des rouleaux 31 et 33, légèrement espacée de la bande 3 et des rouleaux 31 et 33. L'espace e, ménagé entre la protection 35 et la bande 3, est avantageusement compris entre 0 mm et 10 mm, de l'ordre de 5 mm par exemple. L'espace e', ménagé entre la protection 35 et les rouleaux 31 et 33, est sensiblement égal à e.

Comme le montre la figure 2, la protection 35 masque l'angle entre les rouleaux 31 et 33 et la bande 3 sur toute la longueur du berceau 17, par ses côtés 45 et 47, en épousant la courbure du berceau 17 dans le sens de la largeur de la bande 3.

La gaine 39 et l'âme tubulaire 38 sont donc pliées ensemble, essentiellement en deux zones correspondant aux angles formés par les axes de chaque rouleau latéral 33 avec l'axe du rouleau central 31.

Une station 9 d'un convoyeur 1 avec une telle protection 35 est très facilement réalisée grâce à une fabrication et un montage facilité du profilé 36.

La gaine 39 est fabriquée selon le procédé suivant : on extrude une matière plastique, par exemple du polyéthylène, à travers une filière. Après découpe, on obtient une pièce en continu de section constante. La section, définie par la forme de la filière, présente un côté droit 45 et deux côtés 47 et 48 en arc de cercle, chacun adjacent au côté droit 45, et de diamètre distinct. Un trou circulaire dans la section de la filière est prévu pour former lors de l'extrusion un orifice tubulaire continu 43 dans le profilé 36.

On rentre ensuite, dans l'orifice 43, un tube métallique de diamètre conjugué à celui du trou, le tube formant l'âme 38 du profilé 36.

Le profilé 36 ainsi formé est ensuite cintré à la forme du berceau 17 du convoyeur 1, et enfin fixé latéralement au châssis 15 d'une station 9.

La relative déformabilité de l'âme 38 et de la gaine 39 permet d'utiliser un même profilé 36 d'origine pour la fabrication d'un dispositif de protection 35 sur des convoyeurs 1 de courbures différentes.

De préférence, la section du profilé 39 présente deux côtés 47 et 48 en arc de cercle, de diamètres différents correspondant à deux diamètres différents de rouleaux 31, 33 standard permettant là aussi une adaptation à différents types de rouleaux 1.

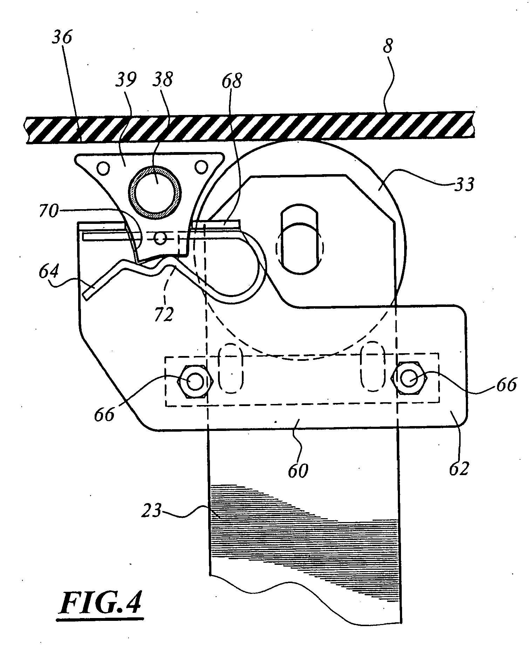

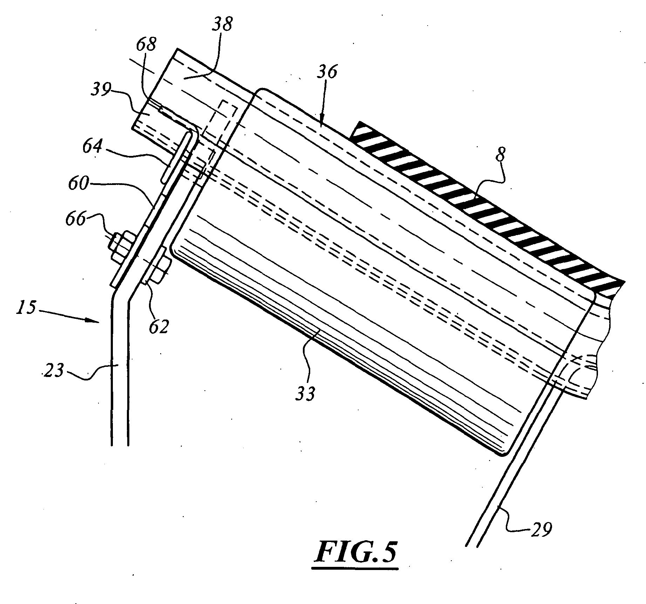

Dans une variante de réalisation illustrée sur les figures 4 et 5, de chaque côté du profilé 36, la plaque de fixation 37 et les vis de fixation 53 sont remplacées par une tôle pliée 60, une contre-plaque 62 et une goupille 64.

Les tôles pliées 60 sont plaquées sur les faces extérieures des pieds 23.

Les contre-plaques 62 sont disposées contre des faces intérieures des pieds 23 et sont rigidement fixées aux tôles pliées 60 par des boulons 66, de telle sorte que les pieds 23 sont pris entre les tôles 60 et les contre-plaques 62.

Les tôles 60 comportent chacune un bord supérieur 68 plié vers l'extérieur, dans lequel est découpé une échancrure 70 de forme conjuguée à celle du profilé 36.

Le profilé 36 est reçu et supporté à ses deux extrémités dans les échancrures 70 des tôles pliées. Il est bloqué à ses deux extrémités dans les échancrures par les goupilles en U 64 engagées dans des trous traversants 72 ménagés dans le profilé 36, et glissées sous les bords pliés 68.

## Revendications

1. Station (9) de support d'un convoyeur (1) à bande (3) mobile du type comprenant :
- un berceau (17) de guidage de la bande (3), le berceau (17) comprenant au moins deux rouleaux (31, 33) de guidage et de support de la bande (3),
- un châssis (15) de support des rouleaux (31, 33), et
- une protection (35) anti-coincement disposée le long des rouleaux (31, 33) et solidarisée au châssis (15),
ladite protection (35) comprenant un profilé (36) de protection s'étendant continûment suivant la longueur d'au moins deux rouleaux (31, 33) en étant sensiblement parallèle à une génératrice de chaque rouleau (31, 33), et ledit profilé (36) étant cintré et épousant la courbure du berceau de guidage (17), **caractérisée en ce que** le profilé (36) comprend une âme longiligne (38) et une gaine (39) entourant l'âme longiligne (38).

2. Station (9) selon la revendication 1, **caractérisée en ce que** le profilé (36) présente une section (41) transversale comprenant un côté (45) tourné vers la bande (3) et un premier côté concave (47) en arc de cercle adjacent sensiblement de même diamètre que les rouleaux (31, 33) et le côté en arc de cercle (47) étant situé en regard de chaque rouleau (31, 33).

3. Station (9) selon la revendication 2, **caractérisée en ce que** la section (41) transversale du profilé (36) comprend un second côté (48) en arc de cercle, adjacent au côté (45) tourné vers la bande (3).

4. Station (9) selon l'une quelconque des revendications précédentes, **caractérisée en ce que** les rouleaux (31, 33) et le profilé (36) sont espacés d'un espace non nul (e').

5. Station (9) selon l'une quelconque des revendications précédentes, **caractérisée en ce que** la protection (35) comprend des moyens de fixation au châssis (15), comprenant deux plaques latérales (37) et des vis de fixation (53), le profilé (36) comporte une face latérale à chacune de ses extrémités, les plaques latérales (37) étant vissées, par les vis de fixation (53), au profilé (36) sur chacune des faces latérales du profilé (36) et étant fixées, par ailleurs, chacune latéralement au châssis (15).

6. Convoyeur (1) **caractérisé en ce qu'**il comporte un ensemble de stations (9) de support selon l'une quelconque des revendications précédentes et une bande de transport (3) propre à circuler sur les stations (9), la bande et le profilé (36) de chaque station étant espacés d'un espace non nul (e).

## Claims

1. Support station (9) for a conveyor (1) having a mobile belt (3) of the type comprising:
• a guide mounting (17) for the belt (3), said mounting (17) comprising at least two guide and support rollers (31, 33) for the belt (3),
• a support frame (15) for the rollers (31, 33), and
• an anti-jamming protection means (35) mounted along the rollers (31, 33) and integral to the frame (15),
wherein said protection means (35) comprises a protection rail (36) extending continuously along the length of at least two rollers (31, 33) substantially parallel to a generating line of each roller (31, 33), and said rail (36) is curved and moulds to the curvature of the guide mounting (17), **characterised in that** the rail (36) comprises an elongated core (38) and a casing (39) enclosing the elongated core (38).

2. Station (9) according to claim 1, **characterised in that** the rail (36) has a cross-section (41) comprising a side (45) directed towards the belt (3) and a first adjacent circular arc-shaped concave side (47) having substantially the same diameter as the rollers (31, 33), wherein the circular arc-shaped side (47) is positioned to face each roller (31, 33).

3. Station (9) according to claim 2, **characterised in that** the cross-section (41) of the rail (36) comprises a second circular arc-shaped side (48) adjacent to the side (45) directed towards the belt (3).

4. Station (9) according to any one of the preceding claims, **characterised in that** the rollers (31, 33) and the rail (36) are spaced from one another at a distance other than zero (e').

5. Station (9) according to any one of the preceding claims, **characterised in that** the protection means (35) comprises means for fastening to the frame (15) comprising two side plates (37) and fastening screws (53), wherein the rail (36) comprises a side face at each of its ends, and the side plates (37) are screwed by the fastening screws (53) to the rail (36) on each of the side faces of the rail (36) and each are additionally secured laterally to the frame (15).

6. Conveyor (1), **characterised in that** it comprises an assembly of support stations (9) according to any one of the preceding claims and a transport belt (3) for running on the stations (9), wherein the belt and the rail (36) of each station are spaced from one another at a distance other than zero (e).

## Patentansprüche

1. Stützstation (9) für einen Förderer (1) mit beweglichem Band (3) des Typs, der umfasst:
- eine Führungswiege (17) des Bands (3), wobei die Wiege (17) mindestens zwei Führungs- und Stützrollen (31, 33) des Bands (3) umfasst,
- ein Stützgestell (15) der Rollen (31, 33), und
- einen Anti-Einklemmungs-Schutz (35), angeordnet längs der Rollen (31, 33) und fest verbunden mit dem Gestell (15),
wobei der genannte Schutz (35) eine Schutz-Profilschiene (36) umfasst, die sich kontinuierlich längs der Länge von wenigstens zwei Rollen (31, 33) erstreckt, dabei im Wesentlichen parallel ist zu einer Mantellinie von jeder Rolle (31, 33), und die genannte Profilschiene (36) gekrümmt ist und sich dabei an die Krümmung der Führungswiege (17) anpasst,
**dadurch gekennzeichnet, dass** die Profilschiene (36) einen Längskern (38) und eine den Längskern (38) umgebende Hülle (39) umfasst.

2. Station (9) nach Anspruch 1, **dadurch gekennzeichnet, dass** die Profilschiene (36) einen Querschnitt (41) mit einer dem Band (3) zugewandten Seite (45) und einer angrenzenden konkaven ersten kreisbogenförmigen Seite (47) mit im Wesentlichen demselben Durchmesser wie die Rollen (31, 33) umfasst und die kreisbogenförmige Seite (47) jeder der Rollen (31, 33) gegenübersteht.

3. Station (9), **dadurch gekennzeichnet, dass** der Querschnitt (41) des Profils (36) eine zweite kreisbogenförmige Seite (48) umfasst, die an die dem Band (3) zugewandte Seite (45) angrenzt.

4. Station (9) nach einem der vorangehenden Ansprüche, **dadurch gekennzeichnet, dass** die Rollen (31, 33) und die Profilschiene (36) durch einen Nichtnull-Abstand (e') beabstandet sind.

5. Station (9) nach einem der vorangehenden Ansprüche, **dadurch gekennzeichnet, dass** der Schutz (35) Einrichtungen zur Befestigung an dem Gestell (15) mit zwei Seitenplatten (37) und Befestigungsschrauben (53) umfasst, die Profilschiene (36) an jedem ihrer Enden eine Seitenfläche umfasst, die Seitenplatten (37) mit den Befestigungsschrauben (53) an jeder der Seitenflächen der Profilschiene (36) an der Profilschiene (36) festgeschraubt sind und außerdem jede lateral an dem Gestell (15) befestigt ist.

6. Förderer (1), **dadurch gekennzeichnet, dass** er eine Vielzahl von Stützstationen (9) nach einem der vorangehenden Ansprüche und ein Transportband (3) umfasst, das auf den Stützstationen (9) zirkulieren kann, wobei das Band und die Profilschiene (36) von jeder Station durch einen Nichtnull-Abstand (e) beabstandet sind.
